(19) Europäisches Patentamt
European Patent Office
Office européen des brevets

(11) **EP 3 048 151 B1**

(12) **EUROPEAN PATENT SPECIFICATION**

(45) Date of publication and mention
of the grant of the patent:
**08.04.2020 Bulletin 2020/15**

(21) Application number: **14846452.2**

(22) Date of filing: **01.09.2014**

(51) Int Cl.:
**C09J 175/04** (2006.01)

(86) International application number:
**PCT/JP2014/072906**

(87) International publication number:
**WO 2015/041034 (26.03.2015 Gazette 2015/12)**

(54) **WATER-DISPERSED PRESSURE-SENSITIVE ADHESIVE COMPOSITION AND PRESSURE-SENSITIVE ADHESIVE SHEET**

IN WASSER DISPERGIERTE HAFTZUSAMMENSETZUNG UND KLEBEBAND

COMPOSITION D'ADHÉSIF SENSIBLE À LA PRESSION DISPERSEÉ DANS L'EAU ET FEUILLE ADHÉSIVE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.09.2013 JP 2013191582**

(43) Date of publication of application:
**27.07.2016 Bulletin 2016/30**

(73) Proprietor: **Nitto Denko Corporation Ibaraki-shi, Osaka 567-8680 (JP)**

(72) Inventor: **KOSO, Masatsugu**
**Ibaraki-shi**
**Osaka 567-8680 (JP)**

(74) Representative: **Grünecker Patent- und Rechtsanwälte**
**PartG mbB**
**Leopoldstraße 4**
**80802 München (DE)**

(56) References cited:
**JP-A- 2010 260 992      JP-A- 2011 126 118**
**JP-A- 2013 056 983      JP-A- 2013 181 107**
**US-A1- 2009 137 727      US-A1- 2013 059 960**

**Description**

[Technical Field]

The present invention relates to a water-dispersed pressure-sensitive adhesive composition and a pressure-sensitive adhesive sheet formed therewith.

[Background Art]

In general, pressure-sensitive adhesive (or PSA; the same applies hereinafter) has characteristics to be in a soft solid (viscoelastic) state in a room temperature range and adhere to adherend under some pressure. With the benefit of such properties of PSA, PSA is widely used in various fields, for instance, as a PSA sheet having PSA (a PSA layer) formed in film. In a typical example of the method for forming the PSA layer, a PSA composition comprising an adhesive ingredient in a liquid medium is applied to and dried on a suitable surface. Lately, from the standpoint of the environmental health, etc., water-dispersed PSA compositions using aqueous solvents as the liquid media tend to be preferred to solvent-based PSA compositions in which adhesive ingredients are dissolved in organic solvents. Technical literatures related to water-dispersed PSA compositions include Patent Documents 1 to 3.

Patent Document 4 discloses a pressure-sensitive adhesive composition comprising an aqueous solvent, an acrylic polymer dispersed in the aqueous solvent, a polyisocyanate crosslinking agent, and a tertiary amine as a neutralizing agent, wherein the composition has a liquid phase with a pH of less than 10.

Patent Document 5 relates to an aqueous pressure-sensitive adhesive composition primarily comprising an acrylic polymer, with the acrylic polymer being dispersed in water, wherein the acrylic polymer is obtained by polymerizing a starting monomer material containing an alkyl (meth)acrylate as a main monomer, and the starting monomer material contains acrylic acid and methacrylic acid.

[Citation List]

[Patent Literature]

[Patent Document 1] Japanese Patent Application Publication No. H8-209086
[Patent Document 2] Japanese Patent Application Publication No. 2006-265537
[Patent Document 3] Japanese Patent Application Publication No. 2010-248465
[Patent Document 4] US 2013/059960 A1
[Patent Document 51] US 2009/137727 A1

[Summary of Invention]

[Technical Problem]

Various properties are required of PSA depending on the purposes. Among these properties, some are difficult to simultaneously achieve at a high level such that in improving a certain property, some other property has a tendency to decrease. An example of a pair of properties difficult to combine is removability and repulsion resistance. The removability herein refers to the ease of removal when a PSA sheet is removed from an adherend after used on the adherend for a certain period of time. Typically, it refers to an ability to prevent or reduce the event of PSA remaining (i.e. leftover PSA) on the adherend during the removal. For instance, in a PSA sheet having a PSA layer formed on a surface of a substrate, when the PSA layer has sufficiently tight adhesion to the substrate, good removability tends to be likely obtained. The repulsion resistance refers to the ability to keep a component that has been elastically deformed and fastened via the PSA to an adherend in the elastically deformed state, that is, the ability to maintain the adhesion between the component and the adherend while resisting the repulsion force of the component for restoring its original shape from the elastically deformed shape. When the PSA's flexibility (stress-relaxation) in having a structural change against stress is insufficient, it is difficult to obtain excellent repulsion resistance. It is beneficial to provide a water-dispersed PSA composition capable of forming a PSA that combines removability and repulsion resistance at a high level.

The present invention has been made in view of such circumstances. An objective thereof is to provide a water-dispersed PSA composition capable of forming a PSA that combines removability and repulsion resistance at a high level. Another related objective is to provide a PSA sheet formed with such a water-dispersed PSA composition.

[Solution to Problem]

The present invention provides a water-dispersed PSA composition comprising a PSA polymer as its base polymer and an isocyanate-based crosslinking agent. The PSA polymer has a weight ratio $G_A$ of ethyl acetate-insoluble portion of 17 % to 50 %. The isocyanate-based crosslinking agent is contained so as to yield a weight ratio $G_B$ of ethyl acetate-insoluble portion of 16 % to 35 % in a crosslinked PSA formed from the PSA composition. The amount of the isocyanate-based crosslinking agent is 0.001 to 10 parts by weight relative to 100 parts by weight of the pressure-sensitive adhesive polymer. The pressure-sensitive adhesive polymer is an acrylic polymer. The water-dispersed PSA composition having such a constitution can form a PSA that combines removability and repulsion resistance at a high level.

It is noted that in Patent Document 3, favorable removability is obtained by lowering the gel fraction of an uncrosslinked PSA composition to increase the anchoring to substrates and then allowing its crosslinking reaction to proceed; and thus, the means to obtain removability is different from the art disclosed herein. The aggregate structure of the PSA disclosed in Patent Document 3 greatly depends on chemical crosslinks by a crosslinking agent. Accordingly, lower stress-relaxation is expected as compared to, for instance, an aggregate structure based on self-entanglement of PSA polymer. Thus, Patent Document 3 does not suggest the combining of removability and repulsion resistance in the art disclosed herein.

The PSA polymer in the art disclosed herein is an acrylic polymer. The use of the acrylic polymer as the base polymer can favorably produce a PSA that combines removability and repulsion resistance at a high level.

The PSA polymer in the art disclosed herein preferably has a glass transition temperature of -60 °C or lower. The use of such a PSA polymer allows formation of a PSA having greater PSA properties (e.g. adhesive strength, repulsion resistance). A PSA sheet comprising the PSA polymer may exhibit excellent impact resistance.

The isocyanate-based crosslinking agent in the art disclosed herein is preferably a water-stable isocyanate-based crosslinking agent. The use of a water-stable species as the isocyanate-based crosslinking agent can favorably incorporate a crosslinked structure in the water-dispersed PSA composition. In this description, the water-stable isocyanate-based crosslinking agent refers to an isocyanate-based crosslinking agent having properties such that the isocyanate group survives in water for at least a prescribed time period. Its details are as described later.

This invention also provides a PSA sheet that comprises a PSA layer formed from the afore-mentioned water-dispersed PSA composition. The PSA sheet having this constitution can combine removability and repulsion resistance at a high level. The PSA sheet preferably comprises a resin film substrate (e.g. polyester) and a PSA layer placed on at least a surface of the resin film substrate. Despite that the PSA layer has been formed from a water-dispersed PSA composition, the PSA sheet having this constitution shows excellent anchoring to resin film. Therefore, it can tightly adhere to resin film and provide excellent removability.

[Brief Description of Drawings]

Fig. 1 shows a cross-sectional view schematically illustrating a constitution example of the PSA sheet.
Fig. 2 shows a cross-sectional view schematically illustrating another constitution example of the PSA sheet.
Fig. 3 shows a cross-sectional view schematically illustrating another constitution example of the PSA sheet.
Fig. 4 shows a cross-sectional view schematically illustrating another constitution example of the PSA sheet.
Fig. 5 shows a cross-sectional view schematically illustrating another constitution example of the PSA sheet.
Fig. 6 shows a cross-sectional view schematically illustrating another constitution example of the PSA sheet.
Fig. 7 shows a schematic cross-sectional diagram illustrating an anchoring strength test method.
Fig. 8 (a) and (b) show diagrams schematically illustrating a repulsion resistance test method.
Fig. 9 shows a graph of the results of the anchoring strength test.

[Description of Embodiments]

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate sizes or reduction scales of the PSA sheet to be provided as an actual product by the present invention.

The term "PSA" in this description refers to, as described earlier, a material that exists as a soft solid (a viscoelastic material) in a room temperature range and has a property to adhere easily to adherend with some pressure applied. As defined in "Adhesion : Fundamental and Practice" by C. A. Dahlquist (McLaren & Sons (1966), P. 143), PSA referred to herein is a material that has a property satisfying complex tensile modulus E* (1Hz) < $10^7$ dyne/cm$^2$ (typically, a material that exhibits the described characteristics at 25 °C).

<PSA Polymer>

(Properties of PSA Polymer)

The water-dispersed PSA composition disclosed herein comprises a PSA polymer as the base polymer. The PSA polymer is characterized by having a weight ratio $G_A$ of ethyl acetate-insoluble portion in a range of 17 % to 50 %. In this description, $G_A$ is thought as an index that indicates the degree of entanglement of the PSA polymer itself. Thus, a high $G_A$ means that the PSA polymer has an aggregate structure with a high degree of entanglement. The aggregate structure based on such entanglement of the PSA polymer has a high ability to relieve stress as compared to a chemically crosslinked structure formed with a crosslinking agent, etc. Thus, it contributes to reduce the lowering of repulsion resistance. On the other hand, too high a $G_A$ tends to decrease the PSA properties (typically the adhesive strength) of the crosslinked PSA finally obtained. The repulsion resistance tends to decrease as well. In typical, too high a $G_A$ relatively reduces the contribution of the chemically crosslinked structure (chemically crosslinked structure formed with an isocyanate-based crosslinking agent) in the gel fraction of the crosslinked PSA; and, for instance, in fabricating a PSA sheet using a substrate such as resin film, the anchoring to the substrate may be insufficient, decreasing the removability. The $G_A$ is preferably 40 % or lower (e.g. 30 % or lower, typically 20 % or lower). The GA can be adjusted by the molecular weight and monomer composition of the PSA polymer, the type and amount of polymerization initiator, the type and amount of surfactant, the type and amount of chain transfer agent, etc. The $G_A$ is measured by the next method. The same applies to the $G_A$ in Examples described later.

[Method for measuring weight ratio $G_A$ of ethyl acetate-insoluble portion of PSA polymer]

Approximately 0.1 g of a PSA polymer (weight W1) is wrapped into a pouch with a porous polytetrafluoroethylene membrane (weight W2) having an average pore diameter of 0.2 μm. The opening is tied with twine (weight W3). The package is immersed in 50 mL of ethyl acetate and stored at room temperature (typically 23 °C) for 7 days to extract out only the sol fraction of the PSA polymer from the membrane. After this, the package is taken out, and any residual ethyl acetate is wiped off the outer surface. The package is then dried at 130 °C for 2 hours and the package weight (W4) is measured. $G_A$ is determined by substituting the respective values into the following equation:

$$G_A\ (\%) = [(W4 - W2 - W3)/W1] \times 100$$

As the porous polytetrafluoroethylene (PTFE) membrane, it is desirable to use trade name NITOFURON® NTF1122 (0.2 μm average pore diameter, 75 % porosity, 85 μm thick) available from Nitto Denko Corporation or a similar product.

The weight average molecular weight (Mw) of the ethyl acetate-soluble portion (sol fraction) of the PSA polymer disclosed herein is not particularly limited. It is preferably larger than $65 \times 10^4$ (e.g. larger than about $85 \times 10^4$, typically larger than $100 \times 10^4$). The use of the PSA polymer having such a Mw tends to improve the removability and repulsion resistance in a well-balanced manner. The upper limit of the Mw is not particularly limited. It is preferably about $200 \times 10^4$ or smaller (e.g. $180 \times 10^4$ or smaller). The number average molecular weight (Mn) of the ethyl acetate-soluble portion (sol fraction) of the PSA polymer is not particularly limited, either. For the same reason as the Mw, it is preferably in a range of about $10 \times 10^4$ to $40 \times 10^4$ (e.g. $15 \times 10^4$ to $30 \times 10^4$, typically $20 \times 10^4$ to $25 \times 10^4$). From the standpoint of combining removability and repulsion resistance at a high level, Mw/Mn is preferably 3 or greater (e.g. 3.5 or greater, typically 4 or greater). The upper limit of Mw/Mn is not particularly limited. It may be usually about 7 or less. In this description, the Mw and Mn of the ethyl acetate-soluble portion of the PSA polymer refer to the weight average molecular weight and number average molecular weight, respectively, based on standard polystyrene determined by gel permeation chromatography (GPC) analysis of a measurement sample (typically the sol fraction). Specifically, the Mw and Mn are measured by the next method. The same applies to the Mw and Mn in Examples described later.

[Method for measuring weight average molecular weight (Mw) and number average molecular weight (Mn)]

In ethyl acetate, the PSA polymer is immersed at room temperature for 7 days to dissolve soluble components.

The extract of the soluble components is dried to obtain a measurement sample. A measurement sample can also be obtained, for instance, by drying the extract (sol fraction) after measurement of weight ratio $G_A$ of the ethyl acetate-insoluble portion of the PSA polymer. The measurement sample is dissolved again in tetrahydrofuran (THF) to prepare a 0.1 % (by weight) THF solution. The THF solution is filtered with a filter having an average pore diameter of 0.45 $\mu$m and with respect to the resulting filtrate (sample solution for molecular weight measurement), the Mw and Mn based on standard polystyrene are determined by GPC measurement system. As the GPC measurement system, model name HLC-8220 GPC available from Tosoh Corporation can be used. The measurement conditions can be as follows:

[GPC Measurement Conditions]

Column: TSK gel GMH HR-H20
Detector: differential refractometer
Eluent: THF
Flow rate: 0.6 mL/min
Measurement temperature: 40 °C
Sample injection volume: 100 $\mu$L

The glass transition temperature (Tg) of the PSA polymer disclosed herein (preferably an acrylic polymer) is not particularly limited. From the standpoint of the PSA properties, it is usually preferably -10 °C or lower (e.g. -30 °C or lower). From the standpoint of the impact resistance, the Tg is more preferably -50 °C or lower (e.g. -60 °C or lower, typically -65 °C or lower). The lower limit of the Tg is not particularly limited. From the standpoint of the ease of production and availability, it is usually preferably -75 °C or higher.

The Tg of a PSA polymer in this description refers to the value determined by the Fox equation based on the Tg values of homopolymers of the respective monomers and the weight fractions (copolymerization ratio by weight) of the monomers with respect to the monomer composition corresponding to the polymer. In the present description, numerical values indicating glass transition temperatures are in "°C" unless otherwise informed.

As the Tg values of the homopolymers, values given in a known document are used. In the art disclosed herein, as the Tg values of the homopolymers, the following values are used specifically:

| | |
|---|---|
| 2-ethylhexyl acrylate | -70 °C |
| n-butyl acrylate | -55 °C |
| ethyl acrylate | -20 °C |
| methyl acrylate | 8 °C |
| methyl methacrylate | 105 °C |
| isobornyl acrylate | 94 °C |
| isobornyl methacrylate | 180 °C |
| vinyl acetate | 32 °C |
| 2-hydroxyethyl acrylate | -15 °C |
| styrene | 100 °C |
| acrylic acid | 106 °C |
| methacrylic acid | 228 °C |

With respect to the Tg values of homopolymers other than the examples listed above, the values given in "Polymer Handbook" (3rd edition, John Wiley & Sons, Inc., Year 1989) are used.

When no values are given in the "Polymer Handbook" (3rd edition, John Wiley & Sons, Inc., Year 1989), values obtained by the following measurement method are used (see Japanese Patent Application Publication No. 2007-51271).

In particular, to a reaction vessel equipped with a thermometer, a stirrer, a nitrogen inlet and a condenser, are added 100 parts by weight of monomer, 0.2 part by weight of azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature, and a homopolymer solution having 33 % by weight solids content is obtained. Then, this homopolymer solution is applied onto a release liner by flow coating and allowed to dry to prepare a test sample (a sheet of homopolymer) of about 2 mm thickness. This test sample is cut out into a disc of 7.9 mm diameter and is placed between parallel plates; and while applying a shear strain at a frequency of 1 Hz using a rheometer (ARES, available from Rheometries Scientific, Inc.), the viscoelasticity is measured in the shear mode over a temperature range of °C to 150 °C at a heating rate of 5 °C/min; and the temperature value at the maximum of the loss modulus G" curve is taken as the Tg of the homopolymer.

(Constitution of PSA Polymer)

The PSA polymer disclosed herein is an acrylic polymere.

The "base polymer" of a PSA refers to the primary component among rubbery polymers contained in the PSA. The term "rubbery polymer" refers to a polymer that exhibits rubber elasticity in a temperature range near room temperature. The term "primary component" in the present description refers to a component at a concentration exceeding 50 % by weight unless otherwise specified.

The term "acrylic polymer" refers to a polymer comprising, as a monomeric unit constituting the polymer, a monomeric unit derived from a monomer having at least one (meth)acryloyl group per molecule. In the following, a monomer having at least one (meth)acryloyl group per molecule may be called "acrylic monomer". The acrylic polymer in this description is defined as a polymer comprising a monomeric unit derived from an acrylic monomer. Typical examples of such an acrylic polymer include an acrylic polymer whose monomer composition contains an acrylic monomer at higher than 50 % by weight.

The "(meth)acryloyl" comprehensively refers to acryloyl and methacryloyl. Similarly, the terms "(meth)acrylate" and "(meth)acryl" comprehensively refer to acrylate and methacrylate, and acryl and methacryl, respectively. The term "(cyclo)alkyl" comprehensively refers to acyclic alkyl and cycloalkyl.

As the acrylic polymer, for example, a polymer of a monomeric starting material comprising an alkyl (meth)acrylate as a primary monomer and possibly comprising a secondary monomer copolymerizable with the primary monomer is preferable. The primary monomer herein refers to a component that accounts for higher than 50 % by weight of the monomer composition in the monomeric starting material.

As the alkyl (meth)acrylate, for instance, a compound represented by the following formula (1) can preferably be used:

$$CH_2=C(R^1)COOR^2 \qquad (1)$$

Herein, $R^1$ in the formula (1) is a hydrogen atom or a methyl group. $R^2$ is a acyclic alkyl group having 1 to 20 carbon atoms (hereinafter, such a range of the number of carbon atoms may be indicated as "$C_{1-20}$"). From the standpoint of the storage elastic modulus of PSA, an alkyl (meth)acrylate having a $C_{1-14}$ (e.g. $C_{1-10}$, typically $C_{4-10}$) acyclic alkyl group for $R^2$ is preferable. An alkyl acrylate having a hydrogen atom for $R^1$ and a $C_{5-10}$ (e.g. $C_{6-9}$, typically $C_8$) acyclic alkyl group for $R^2$ (or simply a $C_{5-10}$ alkyl acrylate hereinafter) is more preferable.

Examples of an alkyl (meth)acrylate with $R^2$ being a $C_{1-20}$ acyclic alkyl group include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, etc. Among these alkyl (meth)acrylates, can be used one species solely or a combination of two or more species. Preferable alkyl (meth)acrylates include n-butyl acrylate (BA) and 2-ethylhexyl acrylate (2EHA). Among them, 2EHA is particularly preferable.

The primary monomer content in all the monomers is preferably 70 % by weight or higher, more preferably 90 % by weight or greater, or yet more preferably 95 % by weight or greater. The upper limit of the primary monomer content is not particularly limited. It is preferably 99.5 % by weight or less (e.g. 99 % by weight or less). The acrylic polymer may be obtained by polymerizing essentially only the primary monomer. When a $C_{5-10}$ alkyl acrylate is included as the primary monomer, the $C_{5-10}$ alkyl acrylate content in the primary monomer is preferably 70 % by weight or greater, more preferably 90 % by weight or greater, or yet more preferably 95 % by weight or greater (typically 99 % to 100 % by weight). The art disclosed herein can be preferably implemented in an embodiment where 2EHA accounts for 50 % by weight or more (e.g. 70 % by weight or more, typically 95 % by weight or more) of the monomer composition of the starting monomers.

The secondary monomer copolymerizable with the alkyl (meth)acrylate being the primary monomer is useful for introducing crosslinking points in the acrylic polymer or increasing the cohesive strength of the acrylic polymer. As the secondary monomer, for instance, the following functional group-containing monomers can be used singly as one species or in a combination of two or more species:

Carboxyl group-containing monomers: for example, ethylenic unsaturated mono-carboxylic acids such as acrylic acid, methacrylic acid, crotonic acid; ethylenic unsaturated dicarboxylic acids such as maleic acid, itaconic acid, citraconic acid, etc., as well as anhydrides thereof (maleic acid anhydride, itaconic acid anhydride, etc.).

Hydroxyl group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, etc.; unsaturated alcohols such as vinyl alcohol, allyl alcohol, etc.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, N-butoxymethyl(meth)acrylamide.

Amino group-containing monomers: for example, aminoethyl (meth)acrylate, N,N-dimethylaminoethyl (meth)acrylate, t-butylaminoethyl (meth)acrylate.

Epoxy group-containing monomers: for example, glycidyl (meth)acrylate, methylglycidyl (meth)acrylate, allyl glycidyl ether.

Cyano group-containing monomers: for example, acrylonitrile, methacrylonitrile.

Keto group-containing monomers: for example, diacetone (meth)acrylamide, diacetone (meth)acrylate, vinyl methyl ketone, vinyl ethyl ketone, allyl acetoacetate, vinyl acetoacetate.

Monomers having nitrogen atom-containing rings: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, N-(meth)acryloyl morpholine.

Alkoxysilyl group-containing monomers: for example, (3-(meth)acryloxypropyl)trimethoxysilane, (3-(meth)acryloxypropyl)triethoxysilane, (3-(meth)acryloxypropyl)methyldimethoxysilane, (3-(meth)acryloxypropyl)methyldiethoxysilane.

As the secondary monomer, a carboxy group-containing monomer is preferably used. The carboxy group-containing monomer is more preferably acrylic acid or methacrylic acid. The art disclosed herein may be practiced to produce the desired effects of the present invention even in an embodiment where the starting monomers used in the polymerization to obtain the acrylic polymer are free of a hydroxy group-containing monomer and/or a nitrogen atom-containing monomer (e.g. a monomer having a nitrogen atom-containing ring).

The amount of the secondary monomer can be suitably selected so as to obtain desirable cohesive strength with no particular limitations. Usually, from the standpoint of combining cohesive strength and other PSA properties (e.g. adhesive strength) in a well-balanced manner, the amount of the secondary monomer is suitably 0.5 % by weight or more of all the monomers in the acrylic polymer, or preferably 1 % by weight or more. The amount of the secondary monomer is suitably 30 % by weight or less of all the monomers, or preferably 10 % by weight or less (e.g. 5 % by weight or less).

For the purpose of increasing the cohesive strength of the acrylic polymer, etc., other co-monomer(s) besides the aforementioned secondary monomers can be used. Examples of such co-monomers include vinyl ester-based monomers such as vinyl acetate, vinyl propionate; aromatic vinyl compounds such as styrene, substituted styrenes ($\alpha$-methylstyrene, etc.), vinyl toluene; cycloalkyl (meth)acrylates such as cyclohexyl (meth)acrylate, cyclopentyl (meth)acrylate, isobornyl (meth)acrylate; aromatic ring-containing (meth)acrylates such as aryl (meth)acrylate (e.g. phenyl (meth)acrylate), aryloxyalkyl (meth)acrylate (e.g. phenoxyethyl (meth)acrylate), arylalkyl (meth)acrylate (e.g. benzyl (meth)acrylate); olefinic monomers such as ethylene, propylene, isoprene, butadiene, isobutylene; chlorine-containing monomers such as vinyl chloride, vinylidene chloride; isocyanate group-containing monomers such as 2-(meth)acryloyloxyethyl isocyanate; alkoxy group-containing monomer such as methoxyethyl (meth)acrylate, ethoxyethyl (meth)acrylate; vinyl ether-based monomers such as methyl vinyl ether, ethyl vinyl ether; and the like. The amount of such other co-monomer(s) can be suitably selected according to the purpose and intended use, and thus is not particularly limited. For instance, it is preferable to be 20 % by weight or less of the monomer composition of the acrylic polymer.

The method for polymerizing the monomers or their mixture is not particularly limited. A heretofore known general polymerization method can be employed. As such a polymerization method, for instance, emulsion polymerization can be preferably used. The embodiment of polymerization is not particularly limited and can be carried out by suitably selecting a heretofore known monomer supply method, polymerization conditions (temperature, time, pressure, etc.) and other components (polymerization initiator, surfactant (emulsifier), etc.) besides the monomers. For example, as the monomer supply method, the entire monomer mixture may be supplied at once to a reaction vessel (all-at-once supply), gradually supplied dropwise (continuous supply), or divided into several portions and supplied portion-wise at every predetermined time (portion-wise supply). The monomers or their mixture are preferably supplied as a dispersion in which they are partially or entirely emulsified in water.

(Polymerization Initiator)

For the polymerization to obtain the PSA polymer (preferably an acrylic polymer), in accordance with the polymerization method type, etc., a commonly known or used polymerization initiator can be suitably selected and used. From the standpoint of the stress relief of the PSA, in emulsion polymerization, an azo-based polymerization initiator can be preferably used. Specific examples of azo-based polymerization initiators include 2,2'-azobisisobutyronitrile (AIBN), 2,2'-azobis(2-methylpropionamidine) disulfate, 2,2'-azobis(2-amidinopropane) dihydrochloride, 2,2'-azobis[2-(5-methyl-2-imidazohn-2-yl)propane] dihydrochloride, 2,2'-azobis(N,N'-dimethyleneisobutylamidine), 2,2'-azobis[N-(2-carboxyethyl)-2-methylpropionamidinel hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methylpropionate), and the like.

Other examples of polymerization initiators include persulfate salts such as potassium persulfate (KPS), ammonium persulfate (APS); peroxide-based initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane, hydrogen peroxide; substituted-ethane-based initiators such as phenyl-substituted ethane; carbonyl-based initiators such as aromatic carbonyl compounds; and so on. Yet other examples of polymerization initiators include a redox-based initiator by combination of a peroxide and a reducing agent. Examples of such a redox-based initiator include combination of a peroxide (hydrogen peroxide water, etc.) and ascorbic acid, combination of a persulfate salt and sodium hydrogen sulfite, and the like. These polymerization initiators can be used singly as one species or in combination of two or more species.

The amount of polymerization initiator used is not particularly limited. To 100 parts by weight of the starting monomers, for instance, the polymerization initiator can be used in an amount selected from a range of typically about 0.005 to 1 part by weight, or preferably about 0.01 to 1 part by weight. The polymerization temperature can be suitably selected according to the types of monomers and the type of polymerization initiator used, etc. Usually, the polymerization temperature is suitably about 20 °C to 100 °C, or preferably about 40 °C to 80 °C.

(Surfactant)

Emulsion polymerization of the starting monomers is usually carried out in the presence of a surfactant (emulsifier). As the surfactant, a known anionic surfactant, nonionic surfactant and the like can be used. A surfactant having a radically polymerizable functional group can be used as well. Hereinafter, the surfactant having a radically polymerizable functional group is referred to as a reactive (polymerizable) surfactant. On the contrary to this, a general surfactant free of a radically polymerizable functional group may be referred to as a non-reactive (non-polymerizable) surfactant. For the surfactant, solely one species or a combination of two or more species can be used.

Examples of a non-reactive anionic surfactant include alkyl sulfates such as lauryl sulfate and octadecyl sulfate; aliphatic acid salts; alkyl benzene sulfonates such as nonyl benzene sulfonate and dodecyl benzene sulfonate; naphthalene sulfonates such as dodecyl naphthalene sulfonate; alkyl diphenyl ether disulfonates such as dodecyl diphenyl ether disulfonate; polyoxyethylene alkyl ether sulfates such as polyoxyethylene octadecyl ether sulfate and polyoxyethylene lauryl ether sulfate; polyoxyethylene alkyl phenyl ether sulfates such as polyoxyethylene lauryl phenyl ether sulfate; polyoxyethylene styrenated phenyl ether sulfate; sulfosuccinates such as lauryl sulfosuccinate and polyoxyethylene lauryl sulfosuccinate; polyoxyethylene alkyl ether phosphates; and polyoxyethylene alkyl ether acetates and the like. When the anionic surfactant is forming a salt, the salt can be, for instance, a metal salt (preferably a monovalent metal salt) such as the sodium salt, potassium salt, calcium salt and magnesium salt; ammonium salt; amine salt, or the like.

Examples of a non-reactive nonionic surfactant include polyoxyethylene alkyl ethers such as polyoxyethylene lauryl ether and polyoxyethylene stearyl ether; polyoxyethylene alkyl phenyl ethers such as polyoxyethylene octyl phenyl ether and polyoxyethylene nonyl phenyl ether; sorbitan fatty acid esters such as sorbitan monolaurate, sorbitan monostearate and polyoxyethylene sorbitan monolaurate; polyoxyethylene glyceryl ether fatty acid esters; and polyoxyethylene-polyoxypropylene block copolymers and the like.

The reactive surfactant is not particularly limited as far as it has a radically polymerizable functional group. For instance, the reactive surfactant may have a structure such that a radically polymerizable functional group is incorporated in an aforementioned anionic surfactant or nonionic surfactant. From the standpoint of the emulsifying ability, etc., an anionic reactive surfactant can be preferably used. The type of radically polymerizable functional group is not particularly limited. For instance, it can be an alkenyl group, acryloyl group, methacryloyl group, etc. Specific examples of the alkenyl group include propenyl groups and isopropenyl group ($CH_2=C(CH_3)-$). The concept of propenyl group referred to herein encompasses 1-propenyl group ($CH_3-CH=CH-$) and 2-propenyl group ($CH_2=CH-CH_2-$which may be called allyl group). The radically polymerizable functional group is preferably an allyl group.

Examples of an anionic reactive surfactant include ammonium polyoxyethylene (allyloxymethyl) alkyl ether sulfate, ammonium polyoxyethylene nonyl propenyl phenyl ether sulfate, sodium alkyl allyl sulfosuccinate, sodium methacryloxy polyoxypropylene sulfate, ammonium polyoxyalkylene alkenyl ether sulfate (e.g. a compound having an isopropenyl group as the terminal alkenyl group) and the like. When the anionic reactive surfactant is forming a salt, the salt can be, for instance, a metal salt such as the sodium salt, ammonium salt, amine salt, or the like. In particular, from the standpoint of adjusting the $G_A$ of the PSA polymer (e.g. an acrylic polymer), a sodium alkyl allyl sulfosuccinate is preferable.

Examples of a nonionic reactive surfactant include polyoxyethylene nonyl propenyl phenyl ether.

Commercial reactive surfactants include products of Dai-ichi Kogyo Seiyaku Co., Ltd., under trade names AQUALON HS-10, AQUALON HS-1025, AQUALON HS-20, AQUALON KH-10, AQUALON KH-1025, AQUALON KH-05, AQUALON BC-0515, AQUALON BC-10, AQUALON BC-1025, AQUALON BC-20, AQUALON BC-2020, AQUALON RN-20, AQUALON RN-30 and AQUALON RN-50; ADEKA products under trade names ADEKARIA SOAP SE-10N and ADEKARIA SOAP SR-1025; Kao Corporation products under trade names LATEMULE PD-104, LATEMULE PD-420, LATEMULE PD-430 and LATEMULE PD-450; products of Sanyo Chemical Industries, Ltd., under trade names ELEMINOL JS-20 and ELEMINOL RS-3000; and a product of Nippon Nyukazai Co., Ltd., under trade name ANTOX MS-60 and the like.

By carrying out emulsion polymerization of the starting monomers in the presence of a reactive surfactant having a radically polymerizable functional group, the reactive surfactant may undergo a reaction to be incorporated into the acrylic polymer. The reactive surfactant incorporated in the acrylic polymer is limited in mobility within the PSA layer and thus is unlikely to bleed to the PSA layer surface. Accordingly, the use of the reactive surfactant can reduce bleeding of a low molecular weight compound to the PSA layer surface. This is preferable from the standpoint of reducing degradation of PSA properties caused by the emulsifier. From the standpoint of obtaining greater PSA properties, it is preferable to apply an embodiment using solely a reactive surfactant as the surfactant for emulsion polymerization.

The amount of the surfactant used is not particularly limited. In view of the polymerization stability as well as the dispersion stability and anti-contamination properties of the polymerization product, etc., the amount of the surfactant used in emulsion polymerization is usually suitably about 0.1 to 5 parts by weight relative to 100 parts by weight of all the monomers, or preferably about 0.5 to 4 parts by weight.

For the polymerization, as necessary, various heretofore known chain transfer agents (which can be considered also as a molecular weight-adjusting agent or polymerization degree-adjusting agent) can be used. The chain transfer agent can be one, two or more species selected from mercaptans such as n-dodecanethiol, t-dodecanethiol, glycidyl mercaptan, 2-mercaptoethanol. Particularly preferable chain transfer agents include n-dodecanethiol and t-dodecanethiol. The amount of chain transfer agent used is not particularly limited. For instance, relative to 100 parts by weight of the monomeric starting material, it can be about 0.001 to 0.5 part by weight or it is usually preferably 0.01 to 0.1 part by weight.

When the water-dispersed PSA composition disclosed herein comprises an acrylic polymer as the base polymer, in addition to the acrylic polymer, it may comprise a non-acrylic polymer. Preferable examples of the non-acrylic polymer include the various polymers exemplified as the PSA polymer while excluding the acrylic polymers. When the water-dispersed PSA composition disclosed herein comprises a non-acrylic polymer in addition to the acrylic polymer, the non-acrylic polymer content to 100 parts by weight of the acrylic polymer is suitably 100 parts by weight or less, preferably 50 parts by weight or less, more preferably 30 parts by weight or less, or yet more preferably 10 parts by weight or less. The non-acrylic polymer content to 100 parts by weight of the acrylic polymer can be 5 parts by weight or less, or even 1 part by weight or less. The art disclosed herein can be preferably practiced, for instance, in an embodiment where the acrylic polymer accounts for 99.5 % to 100 % by weight of the PSA polymer.

<Water-Dispersed PSA Composition>

(Crosslinking Agent)

The water-dispersed PSA composition disclosed herein is characterized by comprising an isocyanate-based crosslinking agent in addition to the PSA polymer. The results of the studies on this feature by the present inventor have revealed that in the PSA formed from the water-dispersed PSA composition, chemical crosslinks incorporated with the isocyanate-based crosslinking agent at a specific ratio significantly improve the removability. Especially, to a resin film substrate such as polyester (typically polyethylene terephthalate (PET)), the PSA layer formed by providing the water-dispersed PSA composition disclosed herein shows notably great anchoring (tight adhesion). Such drastically increased anchoring cannot be obtained with epoxy-based crosslinking agents or any other crosslinking agents. In other words, by using an isocyanate-based crosslinking agent as the crosslinking agent, the art disclosed herein can bring about excellent removability and combine it at the same time with repulsion resistance at a high level. The inclusion of the crosslinking agent tends to increase the holding power of the PSA as well.

As the isocyanate-based crosslinking agent, it is desirable to use a polyisocyanate-based crosslinking agent having two or more isocyanate groups (isocyanate groups having protecting groups; e.g. possibly isocyanate-forming functional groups whose isocyanate groups are temporarily protected via treatment with a blocking agent, multimerization, etc.). The number of isocyanate groups per molecule of the polyisocyanate-based crosslinking agent is preferably 2 to 10 (e.g. 2 to 4, typically 2 or 3).

Examples of the polyisocyanate-based crosslinking agent include aromatic polyisocyanates such as tolylene diisocyanate and xylene diisocyanate; alicyclic isocyanates such as isophorone diisocyanate; and aliphatic polyisocyanates such as hexamethylene diisocyanate. More specific examples include lower aliphatic polyisocyanates such as butylene diisocyanate and hexamethylene diisocyanate; alicyclic polyisocyanates such as cyclopentylene diisocyanate, cyclohexylene diisocyanate and isophorone diisocyanate; aromatic diisocyanates such as 2,4-tolylene diisocyanate, 4,4'-diphenylmethane diisocyanate, xylylene diisocyanate and polymethylene polyphenyl diisocyanate; isocyanate adducts such as trimethylolpropane/tolylene diisocyanate trimer adduct (trade name CORONATE L available from Nippon Polyurethane Industry Co., Ltd.), trimethylolpropane/hexamethylene diisocyanate trimer adduct (trade name CORONATE HL available from Nippon Polyurethane Industry Co., Ltd.) and hexamethylene diisocyanate isocyanurate (available from Nippon Polyurethane Industry, Co., Ltd.; trade name CORONATE HX); polyisocyanates such as polyether polyisocyanate and polyester polyisocyanate; adducts of these polyisocyanates and polyols; and polyfunctionalization products of these polyisocyanates with isocyanurate bonds, biuret bonds, allophanate bonds, etc.

The art disclosed herein uses a water-dispersed PSA composition; and therefore, it is preferable to use aqueous isocyanate-based crosslinking agents such as self-emulsifying polyisocyanate, water dispersible polyisocyanate and water-dispersible block isocyanate. Usually, isocyanate groups (NCO groups) can react with water over time. Thus, they are poorly stable in water. However, with respect to an aqueous isocyanate-based crosslinking agent as described above, for instance, with protection or the use of a dispersing agent, etc., its isocyanate group is fairly stable in water, and it is also highly dispersible in an aqueous solvent. Thus, it is preferable as the crosslinking agent used in the water-dispersed PSA composition.

Among the aqueous isocyanate-based crosslinking agents, it is more preferable to use a water-stable isocyanate-based crosslinking agent. In this description, the "water-stable isocyanate-based crosslinking agent" refers to an isocyanate-based crosslinking agent having properties (water stability) such that the isocyanate group remains even after 5 hours from the start of measurement in an isocyanate water stability test measured by the following method. The isocyanate water stability test is carried out by obtaining a 20 % (by weight) aqueous solution of the isocyanate-based crosslinking agent to be tested, sampling the aqueous solution for quantification of isocyanate groups in the aqueous solution at the start of the measurement and after specific time periods (e.g. at 1 to 5 hour intervals) from the start of the measurement, and determining the ratio of the amount of isocyanate groups (ratio (%) of remaining isocyanate groups) after the specific time periods to the amount of isocyanate groups at the start of measurement. The start of measurement is when the isocyanate-based crosslinking agent is mixed with water (ion-exchanged water) and stirred for five minutes. The test can be carried out at a temperature of 25 °C. Isocyanate groups in the aqueous solution can be quantified by a heretofore known method (e.g. infrared absorption spectroscopy).

In the isocyanate water stability test, it is preferable that for the water-stable isocyanate-based crosslinking agent, isocyanate groups remain (typically at or above 1 %) even after 10 hours (or after 20 hours, or even after 30 hours) from the start of measurement. The water-stable isocyanate-based crosslinking agent preferably has an isocyanate group remaining rate of 50 % or higher (e.g. 80 % or higher, typically 90 % or higher) after 5 hours (or after 10 hours, or even after 20 hours) from the start of measurement.

The water-stable isocyanate-based crosslinking agent include products of DIC Corporation under trade names BURNOCK DNW-5000, BURNOCK DNW-5010, BURNOCK DNW-5100, BURNOCK DNW-5200 and BURNOCK DNW-5500; products of Nippon Polyurethane Industry Co., Ltd., under trade names AQUANATE 100, AQUANATE 105, AQUANATE 110, AQUANATE 120, AQUANATE 130, AQUANATE 200, AQUANATE 210; products of Mitsui Chemicals & SKC Polyurethanes Inc., under trade names TAKENATE WD-220, TAKENATE WD-240, TAKENATE WD-720, TAKENATE WD-725, TAKENATE WD-726, TAKENATE WD-730, TAKENATE WB-700, TAKENATE WB-720 and TAKENATE WB-920; products of Dai-ichi Kogyo Seiyaku Co., Ltd., under trade names ELASTRON BN-04, ELASTRON BN-11, ELASTRON BN-27, ELASTRON BN-69 and ELASTRON BN-77, etc. These can be used singly as one species or in a combination of two or more species.

The isocyanate-based crosslinking agent disclosed herein should be added so as to satisfy a weight ratio $G_B$ of ethyl acetate-insoluble portion of 16 % to 35 % in a crosslinked PSA formed from the water-dispersed PSA composition disclosed herein. As far as this feature is satisfied, the amount of the isocyanate-based crosslinking agent added is not limited. From the standpoint of combining removability and repulsion resistance at a high level with the $G_B$ being in the prescribed range, the amount of the isocyanate-based crosslinking agent added is 0.001 to 10 parts by weight relative to 100 parts by weight of the PSA polymer, or preferably 0.01 to 5 parts by weight (e.g. 0.05 to 3 parts by weight, typically 0.1 to 2 parts by weight).

The water-dispersed PSA composition may comprise other crosslinking agent that is non-isocyanate-based to an extent where the effects of this invention are not impaired. As the other crosslinking agent, crosslinking agents generally used in the field of water-dispersed PSA compositions can be used, such as an epoxy-based crosslinking agent, oxazoline-based crosslinking agent, aziridine-based crosslinking agent and metal chelate-based crosslinking agent, etc. The art disclosed herein can be preferably implemented in an embodiment essentially free of non-isocyanate-based other crosslinking agent.

The water-dispersed PSA composition disclosed herein may further comprise a tackifier. As the tackifier, can be used one, two or more species selected from various tackifier resins such as rosin-based resins, rosin derivative resins, petroleum-based resin, terpene-based resins, phenol-based resins, ketone-based resins. Particularly preferable tackifiers include rosin-based resins, rosin derivative resins and terpene-phenol-based resins.

A preferable example of the tackifier is a stabilized rosin ester resin. As the rosin ester resin, it is possible to use a rosin ester obtained by subjecting a starting rosin to stabilization treatment such as disproportionation and hydrogenation and to purification treatment and further esterifying the stabilized rosin with an alcohol. Examples of such commercial water-dispersed tackifier include products of Arakawa Chemical Industries, Ltd., under trade names SUPER ESTER E-720 and SUPER ESTER E-730-55; and products of Harima Chemicals Group, Inc., under trade names HARIESTER SK-90D, HARIESTER SK-70D, HARIESTER SK-70E and NEOTALL 115E, etc.

Other preferable examples of the tackifier include terpene-phenol-based resins obtainable by phenol modification of terpene-based resins such as $\alpha$-pinene polymer, $\beta$-pinene polymer and diterpene polymer. Commercial terpene-phenol-based tackifiers (possibly in aqueous emulsion forms) that can be preferably used include TAMANOLE-100, TAMANOL E-200 and TAMANOL E-200NT available from Arakawa Chemical Industries, Ltd.

The softening point of the tackifier disclosed herein is not particularly limited. For instance, a tackifier having a softening point in a range of 80 °C to 180 °C can be preferably used. From the standpoint of combining PSA properties such as adhesive strength and repulsion resistance with cohesion (e.g. holding power in a high temperature environment) at a high level, the softening point of the tackifier is preferably 120 °C or higher (e.g. 140 °C or higher).

When using a tackifier, its amount used is not particularly limited. For instance, to 100 parts by weight of the PSA polymer, it can be 1 part by weight or greater. From the standpoint of obtaining the effect of the use of tackifier to a greater extent, it is preferably 5 parts by weight or greater (e.g. 15 parts by weight or greater, typically 25 parts by weight or greater). From the standpoint of reducing the influence on the repulsion resistance, the amount of tackifier used to 100 parts by weight of the PSA polymer is suitably 100 parts by weight or less, or usually preferably 60 parts by weight or less (e.g. 50 parts by weight or less, typically 40 parts by weight or less).

(Aqueous Solvent)

The water-dispersed PSA composition disclosed herein comprises an aqueous solvent as the solvent. The water-dispersed PSA composition is typically a PSA composition comprising a PSA polymer dispersed in an aqueous solvent. The aqueous solvent in the water-dispersed PSA composition disclosed herein refers to water or a solvent mixture comprising water as the primary component (a component accounting for more than 50 % by weight). The other solvent(s) forming the solvent mixture besides water can be one, two or more species selected from various water-miscible organic solvents (lower alcohols, etc.). In the aqueous solvent in this description, the water content is typically 90 % by weight or higher, or preferably 95 % to 100 % by weight.

The PSA composition disclosed herein may contain an acid or a base (aqueous ammonia, etc.) used for pH adjustment and so on. Examples of other optional components that can be contained in the composition include various additives generally used in the field of water-dispersed PSA compositions, such as viscosity-adjusting agent, leveling agent, plasticizer, filler, colorant including pigment and dye, etc., stabilizing agent, preservative, anti-aging agent, and so on. With respect to these various additives, those heretofore known can be used according to typical methods. Since these do not particularly characterize the present invention, detailed descriptions are omitted.

<PSA Sheet>

(Constitution of PSA Sheet)

This description provides a PSA sheet comprising a PSA layer formed from a water-dispersed PSA composition disclosed herein. It may be an on-substrate PSA sheet having such a PSA layer on one or each face of a substrate (support), or a substrate-free PSA sheet having the PSA layer retained on a release liner (which can be considered as a substrate having a release surface). The concept of the PSA sheet referred to herein encompasses those called as PSA tapes, PSA labels, PSA films, and so on. Although the PSA layer is typically formed in a continuous manner, it is not limited to such a form and it can be formed into, for example, a regular or random pattern of dots, stripes, and so on. The PSA sheet provided by the present invention may be in a roll or in a flat sheet. Alternatively, the PSA sheet can be processed into various other forms.

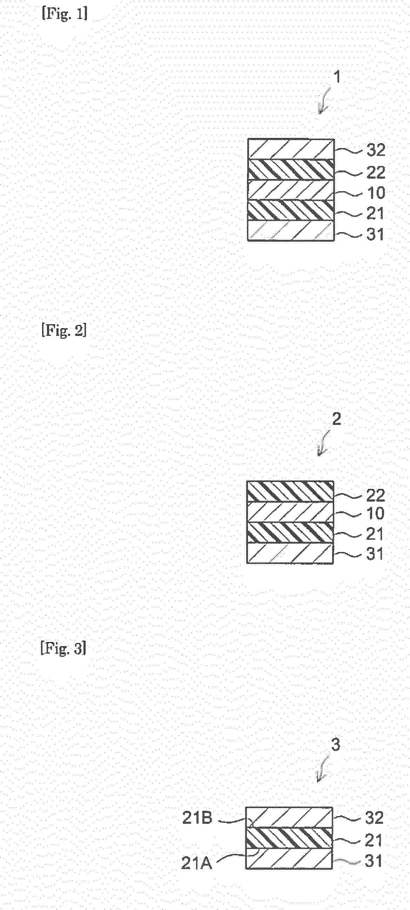

The PSA disclosed herein may have, for example, cross-sectional constitutions schematically illustrated in Fig. 1 to Fig. 6. Among these, Fig. 1 and Fig. 2 show examples of constitutions of an adhesively double-faced on-substrate PSA sheet. PSA sheet 1 illustrated in Fig. 1 has a constitution in which PSA layers 21 and 22 are provided, respectively, on two faces (both non-releasable) of a substrate 10 and the PSA layers 21 and 22 are protected, respectively, with release liners 31 and 32. PSA sheet 2 illustrated in Fig. 2 has a constitution in which PSA layers 21 and 22 are provided, respectively, on two faces (both non-releasable) of a substrate 10 and PSA layer 21 as one of the two is protected with a release liner 31 having a release surface on each face. This type of PSA sheet 2 can be configured so that PSA layer 22 is also protected with release liner 31 by winding the PSA sheet to allow the other PSA layer 22 to contact the back face of release liner 31.

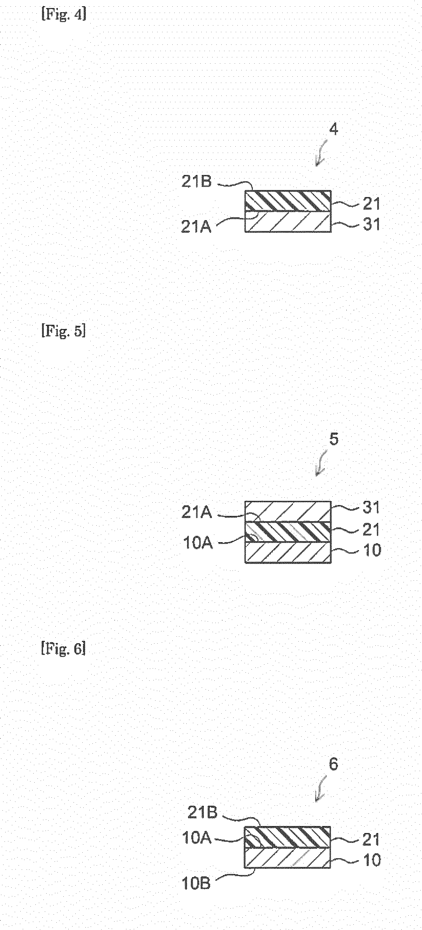

Fig. 3 and Fig. 4 show examples of constitution of a substrate-free double-faced PSA sheet. PSA sheet 3 illustrated in Fig. 3 has a constitution in which two faces 21A and 21B of a substrate-free PSA layer 21 are protected, respectively, with release liners 31 and 32 each having a release surface at least on the PSA layer side. PSA sheet 4 illustrated in Fig. 4 has a constitution such that one surface (adhesive face) 21A of a substrate-free PSA layer 21 is protected with a release liner 31 having a release surface on each face; and when this is wound, the other surface (adhesive face) 21B of PSA layer 21 contacts the back face of release liner 31 so that the other surface 21B is also protected with release liner 31.

Fig. 5 and Fig. 6 show examples of constitution of an adhesively single-faced on-substrate PSA sheet. PSA sheet 5 shown in Fig. 5 has a constitution in which a PSA layer 21 is provided to a face 10A (non-releasable) of substrate 10 and the surface (adhesive face) 21A of the PSA layer 21 is protected with a release liner 31 having a release surface at least on the PSA layer side. PSA sheet 6 shown in Fig. 6 has a constitution in which a PSA layer 21 is provided to a face 10A (non-releasable) of substrate 10. The other face 10B of substrate 10 is a release surface so that when PSA sheet 6 is wound, the other face 10B comes in contact with PSA layer 21 to protect the surface (adhesive face) 21B of the PSA layer.

(PSA Layer)

The PSA layer disclosed herein is characterized by being formed from a water-dispersed PSA composition and having a weight ratio $G_B$ of ethyl acetate-insoluble portion in the PSA layer (crosslinked PSA, in particular, the PSA layer in a fabricated PSA sheet) of 16 % to 35 %. In addition to the $G_A$ of the PSA polymer in the water-dispersed PSA composition being in the range of 17 % to 50 %, when the crosslinked PSA has a $G_B$ in this range, excellent removability can be obtained while maintaining the repulsion resistance at a high level. A low $G_B$ in relation to $G_A$ means that the crosslinked structure formed by the isocyanate-based crosslinking agent is poorly developed in the aggregate structure of the PSA. Accordingly, too low a $G_B$ tends to lower the removability attained by the use of the isocyanate-based crosslinking agent. When the PSA sheet comprises the PSA layer on the surface of a resin film substrate, the tightness of adhesion (anchoring) between the resin film substrate and the PSA layer tends to decrease. Too high a $G_B$ has a tendency to bring about excessively large cohesive strength of the PSA and lower the properties such as adhesive strength and repulsion resistance. The $G_B$ is 16 % or higher (e.g. 18 % or higher, typically 20 % or higher). The $G_B$ is 35 % or lower, (typically 30 % or lower). Such a $G_B$ can be obtained by using a PSA polymer having a $G_A$ in the range of 17 % to 50 % and adjusting the type and amount of isocyanate-based crosslinking agent. The $G_B$ is measured by the following method. The same applies to the $G_B$ in Examples described later.

[Method for Measuring Weight Ratio $G_B$ of Ethyl Acetate-Insoluble Portion of PSA]

The $G_B$ can be measured by the same method as for the $G_A$ measurement, using approximately 0.1 g of the crosslinked PSA in place of the approximately 0.1 g of the PSA polymer in the $G_A$ measurement. The crosslinked PSA can be collected, for instance, from a PSA layer (e.g. a PSA layer formed by applying the water-dispersed PSA composition to a substrate or the like and heating it at 120 °C for 30 minutes). In Examples described later, the first PSA layer is removed with toluene. The resulting PSA sheet (weight $W_A$) formed of the substrate and second PSA layer is immersed in ethyl acetate under the same conditions as the $G_A$ measurement and the weight (weight $W_B$) of the package containing the ethyl acetate-insoluble portion is measured. The weight ($W_C$) of the substrate is subtracted from each of the weights $W_A$ and $W_B$ to determine $G_B$. Specifically, $G_B$ is determined by substituting the respective values into the following equation:

$$G_B (\%) = [(W_B - W2 - W3 - W_C)/(W_A - W_C)] \times 100$$

In the equation, W2 and W3 are the weight of the porous polytetrafluoroethylene membrane and the weight of the twine in the $G_A$, respectively.

From the standpoint of increasing the removability, the PSA disclosed herein preferably satisfies the equation: $G_B(\%) - G_A (\%) \times W_P (\%) \times 10^{-2} > 0$. $G_A (\%)$ and $G_B (\%)$ are as defined above. $W_P$ refers to the weight ratio (%) of the PSA polymer in the non-volatiles of the PSA composition (typically the PSA layer). The $G_B (\%) - G_A (\%) \times W_P (\%) \times 10^{-2}$ is more preferably greater than 1 (e.g. 3, typically 5). From the standpoint of reducing the lowering of repulsion resistance, the PSA disclosed herein preferably satisfies the equation: $G_B (\%) - G_A (\%) \times W_P (\%) \times 10^{-2} < 35$. The $G_B (\%) - G_A (\%) \times W_P (\%) \times 10^{-2}$ is more preferably 25 or less (e.g. 20 or less, typically 10 or less).

The thickness of the PSA layer (each PSA layer when comprising the first and second PSA layers) disclosed herein is not particularly limited and can be suitably selected in accordance with the purpose. Usually, the thickness of the PSA layer is suitably about 3 μm to 200 μm, or preferably about 5 μm to 150 μm. When the PSA sheet disclosed herein is used as a joint or the like inside a small electronic device, the thickness of the PSA layer is preferably 10 μm to 100 μm, or more preferably 12 μm to 80 μm. The PSA sheet disclosed herein can bring about excellent repulsion resistance and combine removability and repulsion resistance at a high level even in an embodiment comprising a PSA layer as thin as less than 50 μm (e.g. less than 30 μm, typically less than 20 μm). When the PSA sheet disclosed herein comprises PSA layers (the first and second PSA layers) on both faces of a substrate, the first and second PSA layers may have the same thickness or different thicknesses.

The PSA layer disclosed herein can be formed by a heretofore known method. For instance, a direct method can be used where the PSA composition is directly provided (typically applied) to a substrate and allowed to dry to form a PSA layer. Alternatively, a transfer method can be employed where the PSA composition is provided to a releasable surface (release face) and allowed to dry to form a PSA layer on the surface and the PSA layer is transferred to a substrate. For the release face, a release liner surface, the substrate's back face treated with a release agent and the like can be used. When the PSA sheet is a double-faced PSA sheet comprising a PSA layer on each face of a substrate, each of the first and second PSA layers may be a PSA layer disclosed herein, or only one of the first and second PSA layers may be a PSA layer disclosed herein with the other layer being a heretofore known PSA layer. From the standpoint of increasing the anchoring to a resin film substrate, the PSA layer disclosed herein is preferably formed by applying the direct method, directly applying the composition to the resin film substrate.

The PSA composition can be applied, using a commonly known or used coater such as a gravure roll coater, reverse roll coater, kiss roll coater, dip roll coater, die coater, bar coater, knife coater and spray coater. Alternatively, the PSA composition can be applied by impregnation, a curtain coating method, etc.

From the standpoint of accelerating the crosslinking reaction and increasing the productivity, etc., the PSA composition is preferably dried with heat. The drying temperature can be, for instance, about 40 °C to 150 °C, or usually preferably about 60 °C to 130 °C. After dried, the PSA composition may be aged for purposes such as adjusting the migration of components in the PSA layer, progressing the crosslinking reaction, and relieving deformation possibly present in the substrate and PSA layer, etc.

(Substrate)

In the single-faced or double-faced on-substrate PSA sheet, as the substrate to support (back) the PSA layers, various types of substrate sheet can be used. As the substrate, resin film, paper, fabrics, rubber sheets, foam sheets, metal foil, a composite of these and the like can be used. Examples of resin film include polyolefin film such as polyethylene (PE), polypropylene (PP), ethylene-propylene copolymers; polyester film such as PET, polyethylene naphthalate (PEN); vinyl chloride resin film; vinyl acetate resin film; polyimide resin film; polyamide resin film; fluorine resin film; cellophane and the like. Examples of paper include Japanese paper, Kraft paper, glassine paper, high-grade paper, synthetic paper, top-coated paper and the like. Examples of fabrics include woven fabric and non-woven fabric of pure or blended yarn of various fibrous materials, etc. Examples of the fibrous materials include cotton, staple cloth, Manila hemp, pulp, rayon, acetate fiber, polyester fiber, polyvinyl alcohol fiber, polyamide fiber, polyolefin fiber, etc. Examples of rubber sheets include natural rubber sheets, butyl rubber sheets, etc. Examples of foam sheets include polyurethane foam sheets, polychloroprene rubber foam sheets, etc. Examples of metal foil include aluminum foil, copper foil, etc. In particular, from the standpoint of the size stability, thickness precision, costs, workability, tensile strength, etc., resin films are preferable. Among resin films, a polyester film is particularly preferable. In this description, the "resin film" is typically a non-porous film and it is conceptually distinguished from so-called non-woven and woven fabrics.

The face (PSA layer-side surface) of the substrate (e.g. resin film, a rubber sheet, a foam sheet, etc.) to which the PSA layer is placed may be subjected to a known or commonly used surface treatment such as corona discharge treatment, plasma treatment, UV ray irradiation, acid treatment, alkaline treatment and primer coating. Such a surface treatment may be provided to increase the tightness of adhesion between the substrate and PSA layer, in other words, the anchoring of the PSA layer to the substrate. For the PSA layer side surface of the substrate, a surface treatment that incorporates a polar group such as hydroxy group (-OH group) can be preferably used. Alternatively, the substrate may not be subjected to a surface treatment to increase the anchoring on the PSA layer-side surface. By using a PSA layer formed from the water-dispersed PSA composition disclosed herein, excellent anchoring can be obtained even to a substrate provided with no surface treatment (a non-surface-treated substrate).

The surface (back face) of the substrate opposite from the face to which the PSA layer is placed may be subjected as necessary to a surface treatment such as anti-static treatment, release treatment and water repellent treatment. The surface treatment to the substrate back face can bring about effects such as easier unwinding of the PSA sheet wound in a roll.

The art disclosed herein can be preferably implemented in an embodiment where the PSA layer is placed on a surface of a resin film substrate such as a polyester film substrate. The PSA sheet according to a preferable embodiment is an adhesively double-faced PSA sheet comprising a resin film substrate, a first PSA layer placed on a first face of the substrate and a second PSA layer placed on a second face of the substrate. In general, with respect to PSA formed from a water-dispersed PSA composition, it is hard to obtain anchoring to resin film substrates, in particular, to polyester film substrates such as PET. However, the PSA formed from the water-dispersed PSA composition disclosed herein may show excellent anchoring to resin film substrates, in particular, polyester film substrates. Thus, by applying the PSA, excellent removability can be provided to a PSA sheet comprising a resin (preferably polyester) film substrate and a PSA layer placed at least on a surface of the substrate. With the use of a resin film as the substrate, the PSA sheet may have greater workability and excellent thickness precision. To the resin film substrate, as necessary, various additives can be added, such as filler (inorganic filler, organic filler, etc.), anti-aging agent, antioxidant, UV absorber, antistatic agent, lubricant, plasticizer and colorant (pigment, dye, etc.).

The thickness of the substrate is not particularly limited and can be suitably selected in accordance with the purpose. It is generally 1 μm to 500 μm or preferably 3 μm to 200 μm. When using resin film as the substrate, from the standpoint of the repulsion resistance, for instance, a 5 μm to 50 μm thick substrate can be preferably used. When the resin film is a transparent resin film, with such a thickness, the PSA sheet may also have excellent transparency. With the substrate thickness being as thin as less than 30 μm (e.g. less than 20 μm, typically less than 10 μm), removability and repulsion resistance can be combined at a high level.

(Release Liner)

As the release liner, any conventional release paper or the like can be used without any particular limitations. For example, a release liner having a release layer on a surface of a liner substrate such as resin film and paper; a release liner formed from a poorly-adhesive material such as a fluorine-based polymer (polytetrafluoroethylene, etc.) or a polyolefin-based resin (polyethylene, polypropylene, etc.); or the like can be used. The release layer can be formed, for instance, by subjecting the liner substrate to a surface treatment with a release agent such as a silicone-based, a long-chain alkyl-based, a fluorine-based, a molybdenum disulfide-based release agent or the like.

The overall thickness of the PSA sheet disclosed herein (which can include PSA layers and a substrate, but no release liner) is not particularly limited. It is suitably in a range of about 5 μm to 1000 μm. In view of the PSA properties, etc., the overall thickness of the PSA sheet is preferably about 10 μm to 500 μm (e.g. 15 μm to 300 μm, typically 20 μm to 200 μm). The PSA sheet disclosed herein can produce excellent repulsion resistance even when the overall thickness is as thin as less than 100 μm (e.g. less than 70 μm, typically less than 50 μm).

(Properties of PSA Sheet)

The PSA sheet disclosed herein preferably has a 180° peel strength to a polycarbonate (PC) plate (to-PC adhesive strength) of 8 N/20mm or greater. The to-PC adhesive strength is more preferably 10 N/20mm or greater (e.g. 12 N/20mm or greater). For example, with the benefit of the high adhesive strength, an adhesively double-faced PSA sheet (double-faced PSA sheet) that has at least one adhesive face exhibiting such to-PC adhesive strength can be preferably used for various purposes (e.g. for semi-permanently fastening a component, etc.), similarly to general double-faced PSA sheets. Because the PSA sheet comprising the PSA formed with the water-dispersed PSA composition disclosed herein has excellent removability despite of the high adhesive strength as described above, it can be used particularly preferably for joining recyclable parts. The to-PC adhesive strength is measured by the method described later in Examples.

The PSA sheet disclosed herein preferably has one hour or longer holding time in a 40 °C holding power test carried out with a 500 g load applied. The PSA sheet disclosed herein more preferably has a displacement distance of 5 mm or smaller from the initial position after one hour in the 40 °C holding power test. The PSA sheet satisfying these properties may combine repulsion resistance and holding power at a high level in an embodiment comprising a PSA layer formed with a water-dispersed PSA composition. The displacement distance is more preferably 2 mm or smaller (e.g. 1 mm or smaller, typically 0.5 mm or smaller). The 40 °C holding power test is carried out by the method described later in Examples.

The PSA sheet disclosed herein preferably exhibits a lifting distance of 10 mm or less after 24 hours at 23 °C in a repulsion resistance test. The lifting distance is more preferably 5 mm or less (e.g. 3 mm or less). The repulsion resistance test is carried out by the method described later in Examples. The PSA sheet disclosed herein preferably does not leave adhesive residue on the adherend in a removability test. The removability test is carried out by the method described later in Examples.

From the standpoint of the environmental health, for the PSA sheet disclosed herein, it is preferable that when the PSA sheet is heated at 80 °C for 30 minutes, the total amount of volatile organic compounds (VOC) released from 1 g of the PSA sheet (which may include a substrate and PSA layers, but no release liner) (or simply the VOC emission hereinafter) is 1000 μg or less (which may be shown in "μg/g" hereinafter). The VOC emission is more preferably 500

$\mu$g/g or less (e.g. 300 $\mu$g/g or less, typically 100 $\mu$g/g or less). When toluene is used as the reference gas, the VOC emission (toluene) is preferably 50 $\mu$g/g or less (e.g. 10 $\mu$g/g or less, typically 1 $\mu$g/g or less). The PSA sheet satisfying these properties can be preferably used for applications that strongly require VOC reduction, such as for home appliances and OA equipment for indoor use or for automobiles and the like. The VOC emission is measured based on the VOC measurement test described later in Examples.

(Applications)

The application of the PSA sheet disclosed herein is not particularly limited. For instance, with the benefit of the high repulsion resistance, it can be preferably used for joining or fastening various parts. Because it exhibits excellent removability, it is preferable as a PSA sheet used on recyclable parts. Accordingly, this description provides a recyclable part to which the PSA sheet disclosed herein is joined. With the benefit of the characteristics described above, it can also be preferably used for joining or fastening various components in automobiles. It is also preferably used for electronic devices, for instance, for joining various components in electronic devices that are carried around for use (mobile electronic devices). For instance, in mobile electronic devices (e.g. mobile phones, smartphones, tablet PCs, digital cameras, etc.) installed with displays such as liquid crystal, the PSA sheet disclosed herein can be preferably used for joining components such as display panels and cases. Thus, this description provides a mobile electronic device comprising at least two components and a PSA sheet (a PSA sheet disclosed herein) that fastens the at least two components. In this description, to be "mobile (portable)," it is unsatisfactory to be simply capable of being carried. Instead, it indicates a level of mobility (portability) that allows for relatively easy carriage by hand of an individual (a typical adult).

Several working examples relating to the present invention are described below, but the present invention is not intended to be limited to these examples. In the description below, "parts" and "%" are based on the weight unless otherwise specified.

<Reference Examples>

(Reference Example 1)

In a reaction vessel equipped with a condenser, nitrogen inlet, thermometer and stirrer, ion-exchanged water was placed and stirred at 60 °C for at least one hour under a nitrogen gas flow. To the reaction vessel, was placed 0.1 part of a polymerization initiator. While keeping the mixture at 60 °C, was gradually added dropwise over four hours an emulsion formed of 100 parts of n-butyl acrylate (BA), 4 parts of acrylic acid (AA), 2 parts of sodium polyoxyethylene alkyl ether sulfate (trade name LATEMULE E-118B available from Kao Corporation), 0.05 part of t-dodecanethiol (available from Wako Pure Chemical Industries, Ltd.) and ion-exchanged water. After the addition was complete, the mixture was maintained at 60 °C for three more hours. The resulting polymerization reaction mixture was allowed to cool to room temperature. Subsequently, by adding ammonia water at 10 % concentration, it was adjusted to pH 7 to obtain a water dispersion of acrylic polymer. As the polymerization initiator, was used 2,2'-azobis[N-(2-carboxyethyl)-2-methylpropionamidine] hydrate (trade name VA-057 available from Wako Pure Chemical Industries, Ltd.).

The resulting water dispersion of acrylic polymer was applied to a face of a 25 $\mu$m thick PET film substrate (trade name LUMIRROR S10 available from Toray Industries, Inc.) and allowed to dry at 120 °C for three minutes to form a 30 $\mu$m thick PSA layer. A single-faced PSA sheet according to this example was thus fabricated. In this example, $G_B$ of the crosslinked PSA (PSA layer) was 0 %.

(Reference Example 2)

To the water dispersion of acrylic polymer obtained in Reference Example 1, for 100 parts of the acrylic polymer in the water dispersion, was further added 0.8 part of an isocyanate-based crosslinking agent to prepare a water-dispersed PSA composition according to this example. As the isocyanate-based crosslinking agent, was used a water-dispersed polyisocyanate (trade name BURNOCK DNW-5010 available from DIC Corporation). This water-dispersed PSA composition was used to form a PSA layer. Otherwise in the same manner as Reference Example 1, a single-faced PSA sheet according to this example was fabricated. In this example, $G_B$ of the crosslinked PSA (PSA layer) was 53 %.

(Reference Example 3)

As the crosslinking agent, in place of 0.8 part of the isocyanate-based crosslinking agent to 100 parts of the acrylic polymer, 0.03 part of an epoxy-based crosslinking agent was used. Otherwise in the same manner as Reference Example 2, a single-faced PSA sheet according to this example was fabricated. In this example, $G_B$ of the crosslinked PSA (PSA layer) was 58 %. As the epoxy-based crosslinking agent, was used trade name TETRAD-C (1,3-bis(N,N-glycidylaminomethyl)cyclohexane) available from Mitsubishi Gas Chemical, Inc.

[Anchoring Strength]

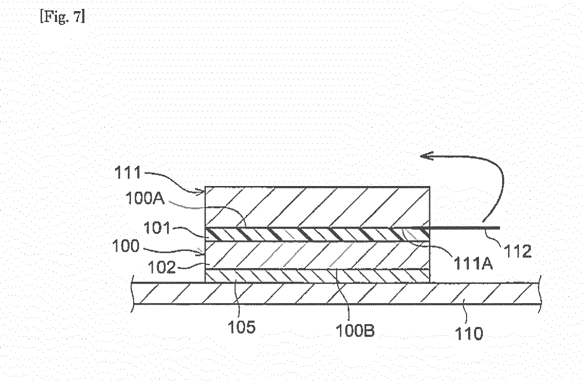

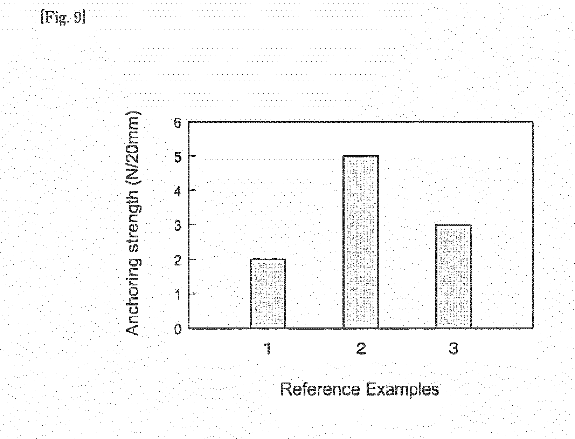

The single-faced PSA sheet according to each reference example (with the adhesive face being in the protected state with the release liner) was cut to 20 mm in width and 100 mm in length to obtain a measurement sample 100 shown in the schematic cross-sectional diagram of Fig. 7. The measurement sample 100 is constituted with a PET film substrate 102 and a PSA layer 101 supported with the substrate 102. The back face (substrate 102-side surface) 100B of the measurement sample 100 was adhered via a commercial double-faced PSA sheet 105 (product name No. 512 available from Nitto Denko Corporation) to a stainless steel plate (SUS plate) 110. Subsequently, the release liner (not shown in the drawing) was removed from measurement sample 100. Onto measurement sample 100, a commercial single-faced PSA sheet 111 (product name No. 315 available from Nitto Denko Corporation, 20 mm wide, 100 mm long) was layered and press-bonded with a 2 kg roller moved back and forth once. The press-bonding was carried out so as to bond measurement sample 100 to single-faced PSA sheet 111 with their adhesive faces 100A and 111A facing each other. During this, at an end of the length direction of measurement sample 100, about 90 μm thick paper piece (strip) (20 mm wide, 30 mm long) 112 was placed and fastened between the adhesive face 100A of measurement sample 100 and the adhesive face 111A of single-faced PSA sheet 111. Of the paper piece 112, in its length direction, from the end of the length direction of measurement sample 100, about 10 mm was between the adhesive face 100A of measurement sample 100 and the adhesive face 111A of single-faced PSA sheet 111 and the remaining about 20 mm extended outward from the end of the length direction of measurement sample 100. This was left standing in the same environment for 30 minutes. Subsequently, the exposed portion of the paper piece 112 was fixed with a chuck. Using a tensile tester, at a peel angle of 180° (in the arrow direction in the drawing), at a tensile speed of 300 mm/min, the PSA layer 101 and substrate 102 in the measurement sample 100 were forcibly peeled apart and the peel strength (N/20mm-width) during this was measured. The resulting value was recorded as the anchoring strength (N/20mm-width). As the tensile tester, a universal tensile/compression tester (system name TCM-1kNB available from Minebea Co., Ltd.) was used. The results are shown in Fig. 9.

As shown in Fig. 9, the PSA sheets according to Reference Examples 2 and 3 in which the crosslinking reaction was carried out with isocyanate-based and epoxy-based crosslinking agents, respectively, showed high anchoring strength as compared to the PSA sheet according to Reference Example 1 which used no crosslinking agent. In comparison between Reference Examples 2 and 3, Reference Example 2 using a isocyanate-based crosslinking agent (specifically, a water-stable isocyanate-based crosslinking agent) showed significantly higher anchoring strength than Reference Example 3 using an epoxy-based crosslinking agent. With the comparable values for the weight ratio $G_B$ of ethyl acetate-insoluble portion of PSA, Reference Examples 2 and 3 are presumed to include similar levels of crosslinked structure as well. Thus, isocyanate-based crosslinking agents are considered superior to epoxy-based crosslinking agents in terms of producing effects to increase the anchoring strength to a substrate (specifically a PET film substrate).

<EXAMPLES>

(Example 1)

[Preparation of PSA Composition]

To a reaction vessel equipped with a condenser, nitrogen inlet, thermometer and stirrer, 220.5 parts of ion-exchanged water was placed and allowed to stir under nitrogen flow at 60 °C for at least one hour. To this reaction vessel, was placed 5.0 parts of a polymerization initiator adjusted to a concentration of 10 % (i.e. 0.5 part active ingredient). While maintaining the mixture at 60 °C, was gradually added dropwise over 4 hours an emulsion formed of 490.8 parts of 2-ethylhexyl acrylate (2EHA), 9.8 parts of acrylic acid (AA), 25.1 parts of a sodium alkyl allyl sulfosuccinate (trade name ELEMINOL JS-20 available from Sanyo Chemical Industries, Ltd.) (40 % active ingredient, i.e. 10.0 parts active ingredient), 1.8 parts of t-dodecanethiol (t-LSH for short, available from Wako Pure Chemical Industries, Ltd.) diluted to 10 % concentration with 2EHA (i.e. 0.18 part active ingredient) and 146.9 parts of ion-exchanged water. After the completion of addition, the mixture was further maintained at 60 °C for 3 hours. The resulting polymerization reaction mixture was allowed to cool to room temperature and adjusted to pH 7 by adding ammonia water of 10 % concentration. As the polymerization initiator, was used 2,2'-azobis[N-(2-carboxyethyl)-2-methylpropionamidine] hydrate (trade name VA-057 available from Wako Pure Chemical Industries, Ltd.). The ethyl acetate-insoluble portion of the acrylic polymer in the polymerization reaction mixture according to this example had a weight ratio $G_A$ of 18.1 %. The acrylic polymer had a weight average molecular weight (Mw) in a range of about $110 \times 10^4$ to $143 \times 10^4$, a number average molecular weight (Mn) of about $24 \times 10^4$ and a Mw/Mn value in a range of about 4.5 to 6.0. The acrylic polymer had a glass transition temperature (Tg) of -68.2 °C.

To 100 parts of the acrylic polymer in the polymerization reaction mixture, were added 0.5 part of an isocyanate-based crosslinking agent and 30 parts of a tackifier to prepare a water-dispersed PSA composition according to this example. As the isocyanate-based crosslinking agent, was used a water-dispersed polyisocyanate (trade name BURNOCK DNW-5010 available from DIC Corporation). As the tackifier, was used trade name TAMANOL E-200NT available from Arakawa Chemical Industries, Ltd.

[Fabrication of PSA Sheet]

The resulting water-dispersed PSA composition was applied to a PET release film (trade name DIAFOIL MRF-38 available from Mitsubishi Plastics, Inc.) and allowed to dry at 120 °C for 3 minutes to form a 13 $\mu$m first PSA layer. The first PSA layer was adhered to a first face of a 5 $\mu$m thick PET film substrate (trade name LUMIRROR 5AF53 available from Toray Industries, Inc.). Subsequently, to the second face of the PET film substrate, the water-dispersed PSA composition was applied and allowed to dry at 120 °C for 3 minutes to form a 13 $\mu$m thick second PSA layer. The double-faced PSA sheet according to this example was thus fabricated. The ethyl acetate-insoluble portion of the second PSA layer according to this example had a weight ratio $G_B$ of 20.8 %. Table 1 summarizes this example and the respective examples described below.

(Example 2)

The amount of the isocyanate-based crosslinking agent was changed to 1.5 parts relative to 100 parts of the acrylic polymer. Otherwise in the same manner as Example 1, a water-dispersed PSA composition was prepared. Using this PSA composition, in the same manner as Example 1, a double-faced PSA sheet according to this example was fabricated. In this example, $G_B$ was 33.1 %.

(Illustrative Example 3)* (*outside the scope of the claims)

As the emulsifier, in place of sodium alkyl allyl sulfosuccinate, ammonium polyoxyethylene-1-(alkyloxymethyl) alkyl ether sulfate (available from Dai-ichi Kogyo Seiyaku Co., Ltd., trade names AQUALON KH-1025) was used. Otherwise in the same manner as Example 2, a water-dispersed PSA composition was prepared. Using this PSA composition, in the same manner as Example 1, a double-faced PSA sheet according to this example was fabricated. In this example, $G_A$ was 5.4 % and $G_B$ was 37.9 %.

(Illustrative Example 4)* (*outside the scope of the claims)

No crosslinking agent was used. Otherwise in the same manner as Example 1, a water-dispersed PSA composition was prepared. Using this PSA composition, in the same manner as Example 1, a double-faced PSA sheet according to this example was fabricated. In this example, $G_B$ was 16.0 %

(Illustrative Example 5)* (*outside the scope of the claims)

The amount of the isocyanate-based crosslinking agent was changed to 5 parts relative to 100 parts of the acrylic polymer. Otherwise in the same manner as Example 1, a water-dispersed PSA composition was prepared. Using this PSA composition, in the same manner as Example 1, a double-faced PSA sheet according to this example was fabricated. In this example, $G_B$ was 48.1 %.

(Illustrative Example 6)* (*outside the scope of the claims)

As the polymerization initiator, ammonium persulfate (APS for short, available from Wako Pure Chemical Industries, Ltd.) was used in place of VA-057. Otherwise in the same manner as Example 2, a water-dispersed PSA composition was prepared. Using this PSA composition, in the same manner as Example 1, a double-faced PSA sheet according to this example was fabricated. In this example, $G_A$ was 59.8 % and $G_B$ was 43.3 %.

[180° Peel Strength to Polycarbonate Plate (to-PC adhesive strength)]

To the first adhesive face (adhesive face of the first PSA layer) of the double-faced PSA sheet according to each example, was adhered a 25 $\mu$m thick PET film (trade name LUMIRROR S10 available from Toray Industries, Inc.). The resultant was cut into a 20 mm wide by 100 mm long size to prepare a measurement sample. In an environment at 23 °C and 50 % RH, the second adhesive face (adhesive face of the second PSA layer) of the measurement sample was exposed and the second adhesive face was press-bonded to a polycarbonate plate surface with a 2 kg rubber roller moved back and forth once. This was left standing in the same environment for 30 minutes and measured for peel strength (N/20mm-width) using a tensile tester, based on JIS Z0237, at a peel angle of 180° at a tensile speed of 300 mm/min. As the tensile tester, a universal tensile/compression tester (system name TCM-1kNB available from Minebea Co., Ltd.) was used. The results are shown in Table 1.

[Holding Power]

To the first adhesive face (adhesive face of the first PSA layer) of the double-faced PSA sheet according to each example, was adhered a 25 $\mu$m thick PET film (trade name LUMIRROR S10 available from Toray Industries, Inc.). The resultant was cut into a 10 mm wide by 100 mm long size to prepare a test piece. The second adhesive face (adhesive face of the second PSA layer) of the test piece was exposed and at room temperature (23 °C), the test piece was press-bonded over a 10 mm wide by 20 mm long bonding area to a Bakelite plate (phenol resin plate) as the adherend with a 2 kg roller moved back and forth once. The test piece thus bonded on the adherend was left standing in the same environment for 30 minutes. Subsequently, the adherend was vertically suspended with the length of the test piece being in the vertical direction. To the free end of the test piece, a 500 g load was applied. Based on JIS Z0237, with the load applied, it was left standing in an environment at 40 °C for one hour. After left standing in this manner, the distance that the test piece was displaced (displacement distance) was measured. When the test piece fell off the adherend within one hour, the time required for the fall was recorded. The results are shown in Table 1.

[Repulsion Resistance Test]

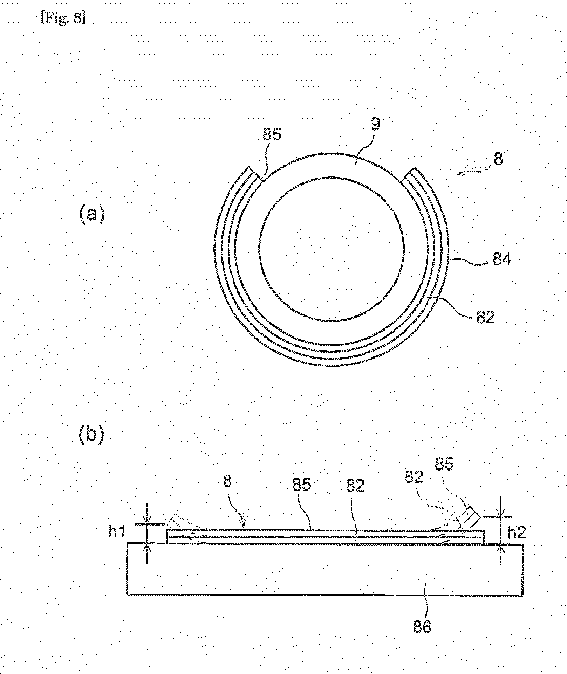

The double-faced PSA sheet according to each example was cut into a 10 mm wide by 90 mm long size while the first and second adhesive faces were protected with the first and second release liners, respectively. From the PSA sheet, the first release liner was removed and the exposed first adhesive face (adhesive face of the first PSA layer) was adhered to a toluene-washed surface of a 10 mm wide by 90 mm long by 0.3 mm thick aluminum plate to prepare a test piece in which the PSA layer was backed with the aluminum plate. The test piece was left standing still at 23 °C for one day. Subsequently, as shown in Fig. 8(a), with the aluminum plate 85-side of test piece 8 being on the inside, the length direction of test piece 8 was curved along the circumference of a cylindrical glass tube 9 of 40 mm diameter for 10 seconds. As shown in Fig. 8(b), the second release liner 84 was then removed from the PSA layer (second PSA layer) 82 of test piece 8 and the adhesive face (second adhesive face) was press-bonded to a pre-washed surface of an acrylic plate (adherend) 86 at a bonding pressure of 0.25 MPa at a bonding speed of 0.3 m/min, using a small laminator available from Taisei Laminator Co., Ltd. After 24 hours at 23 °C, as shown by imaginary lines in Fig. 8(b), distances h1 and h2 that the two edges of test piece 8 were lifted from the surface of adherend 86 were measured. The average value between the two edges was determined as the lifting distance of test piece 8. The results are shown in Table 1.

[Removability Test]

To the first adhesive face of the double-faced PSA sheet according to each example, was adhered a 25 $\mu$m thick PET film (trade name LUMIRROR S10 available from Toray Industries, Inc.). The resultant was cut into a 20 mm wide by 100 mm long size to prepare a measurement sample. In an environment at 23 °C and 50 % RH, the second adhesive face of the measurement sample was exposed and press-bonded to a stainless steel plate (SUS304BA plate) as the adherend with a 2 kg rubber roller moved back and forth once. The measurement sample was stored at 80 °C for 5 days. Subsequently, in an environment at 23 °C and 50 % RH, using a tensile tester, the sample was removed from the adherend (SUS plate) at a tensile speed of 300 mm/min, at a peel angle of 180°. The states of the PSA sheet and adherend after the removal were observed and the removability was graded to the following two levels:

   Good: No leftover adhesive residue was found on the adherend.
   Poor: Leftover adhesive residue was observed on the adherend.

As the tensile tester, a universal tensile/compression tester (system name TCM-1kNB available from Minebea Co., Ltd.) was used. The results are shown in Table 1.

[VOC Measurement Test]

From the double-faced PSA sheets according to Examples 1 and 2, 5 cm$^2$ sections (two 1 cm by 2.5 cm pieces of the double-faced PSA sheets) were cut out. After the release liners were removed, they were placed in vials (20 mL) and sealed. The vials were then stored at 80 °C for 30 minutes, using a head space sampler (HSS system). At the same temperature, a 1 mL sample of the gas inside each vial was collected and injected into a gas chromatography (GC system) for measurement to determine the weight of toluene gas formed. The weight was converted to the weight ($\mu$g) per gram of double-faced PSA sheet (excluding any release liner) and the value was used as the VOC emission (toluene) ($\mu$g/g). Thus, this test is a VOC measurement test that uses toluene as the reference gas. The weight of toluene gas was determined from the value computed from the calibration curve of acetone (or toluene) that had been prepared beforehand. The HSS and GC settings were as follows. It is noted that when measuring the total VOC, the total weight of not just toluene but all the gas formed can be measured in the same manner as for the toluene gas.

HSS: model number "7694" available from Agilent Technologies

Heating time: 30 min

Pressurization time: 0.12 min

Loop filling time: 0.12 min

Loop equilibration time: 0.05 min

Injection time: 3 min

Sample loop temperature: 160 °C

Transfer line temperature: 200 °C

GC system: model number "6890" available from Agilent Technologies

Column: J&W capillary column under trade name "DB-ffAP" available from GL Science (0.533 mm inner diameter $\times$30 m length, 1.0 $\mu$m thick membrane)

Column temperature : 250 °C (The temperature was raised at 10 °C/min from 40 °C to 90 °C, followed at 20 °C/min to 250 °C and maintained there for 5 minutes.)

Colum pressure: 24.3 kPa (constant flow mode)

Carrier gas: helium (5.0 mL/min)

Injection port: split (split ratio 12:1)

Injection port temperature: 250 °C

Detector: FID

Detector temperature: 250 °C

[Table 1]

Table 1

| Example | | 1 | 2 | 3** | 4** | 5** | 6** |
|---|---|---|---|---|---|---|---|
| Polymer (parts*) | 2EHA | 100 | 100 | 100 | 100 | 100 | 100 |
| | AA | 2 | 2 | 2 | 2 | 2 | 2 |
| | VA-057 | 0.1 | 0.1 | 0.1 | 0.1 | 0.1 | 0 |
| | APS | 0 | 0 | 0 | 0 | 0 | 0.1 |
| | Eleminol JS-20 | 2 | 2 | 0 | 2 | 2 | 2 |
| | Aqualon KH-1025 | 0 | 0 | 2 | 0 | 0 | 0 |
| | t-LSH | 0.035 | 0.035 | 0.035 | 0.035 | 0.035 | 0.035 |
| $G_A$ (%) | | 18.1 | 18.1 | 5.4 | 18.1 | 18.1 | 59.8 |
| Crosslinking agent (parts*) | Bumock DNW-5010 | 0.5 | 1.5 | 1.5 | 0 | 5 | 1.5 |
| Tackifier (parts*) | Tamanol E-200NT | 30 | 30 | 30 | 30 | 30 | 30 |
| $G_B$ (%) | | 20.8 | 33.1 | 37.9 | 16.0 | 48.1 | 43.3 |
| To-PC adhesive strength (N/20mm) | | 12.6 | 13.0 | 10.6 | 10.6 | 8.5 | 9.4 |
| Holding power | | 0.55 mm | 0.18 mm | 0.40 mm | 24min | 0.08 mm | 0.10 mm |
| Repulsion resistance (mm) | | 2.4 | 3.0 | 14.6 | 1.4 | 13.6 | 12.4 |
| Removability | | Good | Good | Good | Poor | Good | Good |

*For the components used in the polymer synthesis, the relative values are shown with 2EHA being 100 parts.
The crosslinking agent and tackifier are shown in parts per 100 parts of the polymer (phr).
** Examples 3 to 6 are Illustrative Examples outside the scope of the claims

As shown in Table 1, removability and repulsion resistance were combined at a high level in Examples 1 and 2, with each using an isocyanate-based crosslinking agent as the crosslinking agent and satisfying both a weight ratio $G_A$ of ethyl acetate-insoluble portion of acrylic polymer of 17 % to 50 % and a weight ratio $G_B$ of ethyl acetate-insoluble portion of crosslinked PSA of 16 % to 35 %. On the other hand, Illustrative Example 3 with the weight ratio $G_A$ of ethyl acetate-insoluble portion of acrylic polymer below 10 % did not yield good repulsion resistance. Presumably, this is because the ratio $G_A$ was small and the stress-relaxation was low. Illustrative Example 4 using no isocyanate-based crosslinking agent did not bring about good removability. To obtain favorable removability, the presence of chemical crosslinks by an isocyanate-based crosslinking agent is found important. From this result, it is presumed that even if an isocyanate-based crosslinking agent is used, when $G_B$ is below 16 %, excellent removability will not be obtained. Additionally, Illustrative Example 5 with $G_B$ above 45 % did not bring about good repulsion resistance. This may be because the isocyanate-based crosslinking agent introduced many chemical crosslinks, leading to excessive aggregation; and as a result, the repulsion resistance decreased. This can be seen also in the relatively low to-PC adhesive strength value exhibited in Illustrative Example 5. Furthermore, Illustrative Example 6 with $G_A$ above 50 % did not bring about good repulsion resistance, either. From these results, it can be seen that at or below a certain ratio value, $G_A$ contributes to maintain repulsion resistance, but too high a $G_A$ value ends up lowering the repulsion resistance.

While not specifically shown in the table, the VOC emissions (toluene) of the PSA sheets according to Examples 1 and 2 were both about 0.7 μg per gram of double-faced PSA sheet (excluding any release liner).

[Reference Signs List]

    1, 2, 3, 4, 5, 6 PSA sheets
    10 substrate
    21, 22 PSA layers
    31, 32 release liners

**Claims**

1. A water-dispersed pressure-sensitive adhesive composition comprising a pressure-sensitive adhesive polymer as its base polymer and an isocyanate-based crosslinking agent, wherein
   the pressure-sensitive adhesive polymer has a weight ratio $G_A$ of ethyl acetate-insoluble portion of 17% to 50%, the weight ratio being $G_A$ being determined as disclosed herein,
   the isocyanate-based crosslinking agent is contained so as to yield a weight ratio $G_B$ of ethyl acetate-insoluble portion of a crosslinked pressure-sensitive adhesive formed from the pressure-sensitive adhesive composition of 16% to 35%, the weight ratio $G_B$ being determined as disclosed herein,
   the amount of the isocyanate-based crosslinking agent is 0.001 to 10 parts by weight relative to 100 parts by weight of the pressure-sensitive adhesive polymer, and
   wherein the pressure-sensitive adhesive polymer is an acrylic polymer.

2. The composition according to claim 1, wherein the pressure-sensitive adhesive polymer has a glass transition temperature (Tg) of -60 °C or lower, wherein the Tg is determined by the Fox equation based on the Tg values of homopolymers of the respective monomers and the weight fractions in terms of the copolymerization ratio by weight of the monomers with respect to the monomer composition corresponding to the polymer.

3. The composition according to claims 1 or 2, wherein the isocyanate-based crosslinking agent is a water-stable isocyanate-based crosslinking agent.

4. A pressure-sensitive adhesive sheet that comprises a pressure-sensitive adhesive layer formed from the water-dispersed pressure-sensitive adhesive composition of any one of claims 1 to 3.

**Patentansprüche**

1. Wasserdispergierte druckempfindliche Haftmittelzusammensetzung mit einem druckempfindlichen Haftpolymer als Basispolymer und einem Isocyanat-basierten Vernetzungsmittel, wobei
   das druckempfindliche Haftpolymer ein Gewichtsverhältnis $G_A$ an Ethylacetat-unlöslichem Teil von 17 % bis 50 % hat, wobei das Gewichtsverhältnis $G_A$ in der hierin offenbarten Art ermittelt ist,
   das Isocyanat-basierte Vernetzungsmittel so enthalten ist, dass es ein Gewichtsverhältnis $G_B$ des Ethylacetat-unlöslichen Teils eines vernetzten druckempfindlichen Haftmittels, das aus der druckempfindlichen Haftmittelzusammensetzung gebildet ist, von 16 % bis 35 % ergibt, wobei das Gewichtsverhältnis $G_B$ in der hierin offenbarten Art ermittelt ist,
   wobei der Anteil des Isocyanat-basierten Vernetzungsmittels 0,001 bis 10 Gewichtsteile in Bezug auf 100 Gewichtsteile des druckempfindlichen Haftpolymers beträgt, und
   wobei das druckempfindliche Haftpolymer ein Acrylpolymer ist.

2. Zusammensetzung nach Anspruch 1, wobei das druckempfindliche Haftpolymer eine Glasübergangstemperatur (Tg) von -60 °C oder niedriger hat, wobei die Tg durch die Fox-Gleichung auf der Grundlage der Tg-Werte von Homopolymeren der jeweiligen Monomere und den Gewichtsanteilen ausgedrückt durch das Copolymerisierungsgewischtsverhältnis der Monomere bezogen auf die Monomerzusammensetzung, die dem Polymer entspricht, bestimmt ist.

3. Zusammensetzung nach Anspruch 1 oder 2, wobei das Isocyanat-basierte Vernetzungsmittel ein wasserstabiles Isocyanat-basiertes Vernetzungsmittel ist.

4. Druckempfindliche Klebefolie, die eine druckempfindliche Haftschicht aufweist, die aus der wasserdispergierten druckempfindlichen Haftmittelzusammensetzung nach einem der Ansprüche 1 bis 3 gebildet ist.

**Revendications**

1. Composition d'adhésif sensible à la pression dispersée dans l'eau comprenant un polymère adhésif sensible à la pression qui est son polymère de base et un agent de réticulation à base d'isocyanate, dans laquelle
   le polymère adhésif sensible à la pression a un rapport massique $G_A$ d'une partie insoluble dans l'acétate d'éthyle de 17 % à 50 %, le rapport massique noté $G_A$ étant déterminé comme décrit dans la description,

l'agent de réticulation à base d'isocyanate est présent de façon à donner un rapport massique $G_B$ de la partie insoluble dans l'acétate d'éthyle d'un adhésif sensible à la pression réticulé formé à partir de la composition d'adhésif sensible à la pression de 16 % à 35 %, le rapport massique $G_B$ étant déterminé comme décrit dans la description, la quantité d'agent de réticulation à base d'isocyanate va de 0,001 à 10 parties en poids pour 100 parties en poids du polymère adhésif sensible à la pression, et

dans laquelle le polymère adhésif sensible à la pression est un polymère acrylique.

2. Composition selon la revendication 1, dans laquelle le polymère adhésif sensible à la pression a une température de transition vitreuse (Tg) de -60 °C ou moins, Tg étant déterminée par l'équation de Fox sur la base de valeurs de Tg d'homopolymères des monomères respectifs et des fractions massiques en termes de rapport de copolymérisation en poids des monomères par rapport à la composition de monomères correspondant au polymère.

3. Composition selon les revendications 1 ou 2, dans laquelle l'agent de réticulation à base d'isocyanate est un agent de réticulation à base d'isocyanate stable dans l'eau.

4. Feuille adhésive sensible à la pression qui comprend une couche d'adhésif sensible à la pression formée à partir de la composition d'adhésif sensible à la pression dispersée dans l'eau selon l'une quelconque des revendications 1 à 3.

[Fig. 1]

1

— 32
— 22
— 10
— 21
— 31

[Fig. 2]

2

— 22
— 10
— 21
— 31

[Fig. 3]

3

21B —

— 32
— 21

21A —

— 31

[Fig. 4]

4

21B

21

21A

31

[Fig. 5]

5

21A

31

21

10A

10

[Fig. 6]

6

21B

21

10A

10

10B

[Fig. 7]

[Fig. 8]

(a)

(b)

EP 3 048 151 B1

[Fig. 9]

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8209086 B
- JP 2006265537 A
- JP 2010248465 A
- US 2013059960 A1
- US 2009137727 A1
- JP 2007051271 A

**Non-patent literature cited in the description**

- **C. A. DAHLQUIST.** Adhesion : Fundamental and Practice. McLaren & Sons, 1966, 143
- Polymer Handbook. John Wiley & Sons, Inc, 1989